# EUROPEAN PATENT APPLICATION

(11) **EP 3 352 175 A1**
(43) Date of publication of application: **25.07.2018**
(21) Application number: 18151876.2
(22) Date of filing: 16.01.2018
(51) Int. Cl.: G21F 9/02, G21F 9/32, B01D 53/68

(54) **METHOD AND APPARATUS FOR WASTE DISPOSAL**

(30) Priority: 23.01.2017 IT 201700006636
(71) Applicant: Sgargi, Andrea, 43038 Sala Baganza (Parma) (IT)
(72) Inventor: Sgargi, Andrea, 43038 Sala Baganza (Parma) (IT)
(74) Representative: Lunati & Mazzoni S.r.L.

(57) **Abstract**

There is provided a method (1) for disposing of waste (2), in which the waste (2) is radioactive waste and the method (1) comprises a first step (1a) in which pre-treatment waste (2a) is placed inside a pyrolytic reactor (3), a second step (1b), in which the pre-treatment waste (2a) is thermally disintegrated by pyrolysis into treated waste (4), the treated waste (4) comprising a solid phase (40) and a gaseous phase (41), and the method (1) further comprising a third step (1c) in which the solid phase (40) is stored according to known radioactive waste storage procedures and a fourth step (1d) in which the gaseous phase (41) is expelled into the outside environment.

## Description

The present invention relates to a method and apparatus for waste disposal of the type as recited in the preamble of Claim 1.

In particular, the present invention relates to a method and apparatus suitable to thermally disintegrate the molecules of the waste to be disposed of.

As is known, the use of radioactivity and of its properties in numerous sectors leads to the production of radioactive materials which, when they can no longer be used, become radioactive waste.

Because they emit radioactivity, they must be disposed of properly in order to avoid any risks to man or to the environment.

There are several classes of radioactive waste, subject to different management procedures, according to the concentration of radionuclides and their radioactive decay time.

According to the IAEA (International Atomic Energy Agency), there are five types of radioactive waste: very short lived; very low level; low level; intermediate level and high level.

The first class includes waste for example from the medical sector, from the research sector and from consumable materials and equipment, whereas higher level classes include items of clothing and parts of equipment used at nuclear energy production plants.

Radioactive waste is generally stored in temporary or permanent storage facilities where it can be managed in safety and kept isolated from the environment and from humans.

Therefore, in the present state of the art, disposal essentially consists in the storage of the waste at dedicated sites designed to hold said waste for as long as it takes for the related radioactive decay to occur.

The prior art described above has several significant drawbacks.

In particular, the radioactive material is stored in isolation containers which are then held in specific places where they take up a large amount of space.

Radioactive waste is not actually disposed of, but is instead stored temporarily at decay facilities, taking up room and sometimes leading to storage saturation. Moreover, the fact that such waste is not disposed of has the inconvenience that the risk of environmental contamination persists, for instance if the storage facilities are inadequate or malfunctioning.

In this situation the technical purpose of the present invention is to develop a method and apparatus for waste disposal able to substantially overcome at least some of the inconveniences mentioned above.

Within the sphere of said technical purpose one important aim of the invention is to obtain a method and apparatus for waste disposal suitable to consent the effective disposal of a large part of the radioactive material.

Another important aim of the invention is to provide a method and apparatus for waste disposal that make it possible to limit the amount space and time occupied by radioactive waste.

Therefore a further purpose of the invention is to reduce the risks associated with the correct storage of such waste and the costs associated with maintaining the facilities where such waste is stored.

The technical purpose and specified aims are achieved with a method and apparatus for waste disposal as claimed in the appended Claim 1. Examples of a preferred embodiment are described in the dependent claims.

The characteristics and advantages of the invention are clearly evident from the following detailed description of preferred embodiments thereof, with reference to the accompanying drawings, in which:

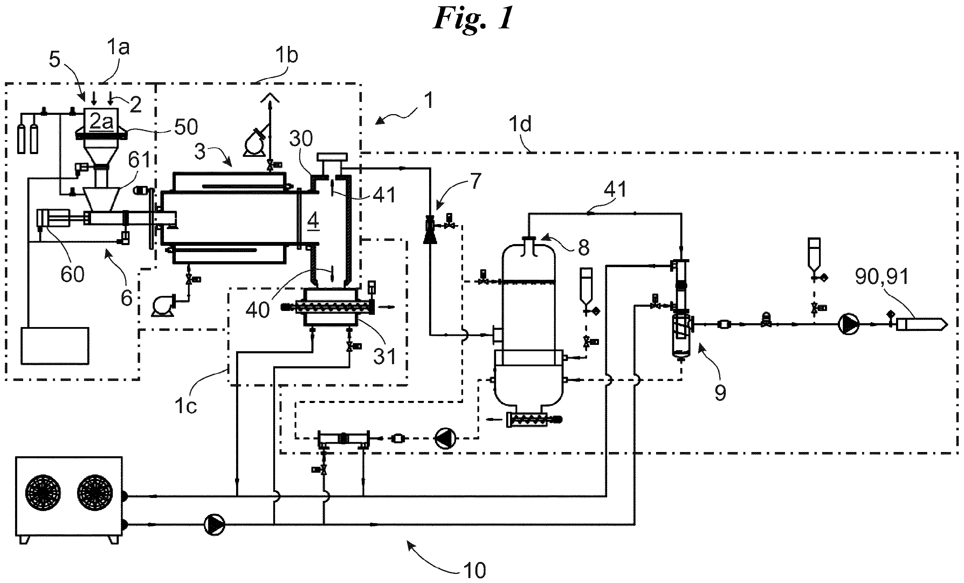

Fig. 1 shows a diagram of the apparatus according to the invention.

In this document, measurements, values, forms and geometric data (such as perpendicularity and parallelism), when used with terms such as "about" or other similar terms such as "more or less" or "substantially", are to be considered without any measurement errors or inaccuracies due to production and/or manufacturing errors and, above all, without any slight divergence from the value, measurement, form or geometric data with which they are associated. For example, such terms, when associated with a value, preferably indicate a difference of not more than 10% of said value.

Moreover, terms such as "first", "second", "upper", "lower", "main" and "secondary" do not necessarily indicate an order, priority or respective position, but may simply be used in order to make a clear distinction between the different components. Unless otherwise indicated, the measurements and data provided in this document are to be considered using International Standard Atmosphere ICAO (ISO 2533). With reference to the Figures, reference numeral **1** globally denotes the waste disposal method according to the invention.

In particular, the method 1 of waste disposal is preferably applied to waste **2** of a radioactive type. Moreover, such waste is for example organic waste and may include for example waste from the medical sector, from the research sector and from consumable materials and equipment, or from items of clothing and parts of equipment used at nuclear energy production plants.

The method 1 thus comprises a first step **1a,** a second step **1b,** a third step **1c** and a fourth step **1d.**

In the first step 1 a the waste 2 is preferably placed inside a plant **10.**

In detail, the waste 2, in this step, is pre-treatment waste **2a.**

The pre-treatment waste 2a is waste 2 that has not yet been subjected to the method 1 and is therefore essentially the waste 2 in its state when collected.

The plant 10 preferably consists of a series of devices suitable to implement the method 1.

For example the plant 10 comprises a hopper **5.**

The hopper 5 is preferably of the known type and is thus essentially a container with inclined walls provided with an aperture having a variable cross-section that can be adjusted to discharge material and, in the specific example, pre-treatment waste 2a. The volume described by said hopper 5 is also preferably proportionate to the amount of waste 2 that can be processed simultaneously in the plant 10.

In addition the hopper 5 comprises weighing means **50.** Said weighing means 50 are preferably suitable to measure the weight of the pre-treatment waste 2a that is introduced into the hopper 5 and thus into the plant 10. Said weighing means 50 are thus communicating with at least part of a feed apparatus **6.**

The feed apparatus 6 comprises a duct which extends from the aperture of the hopper 5 and leads to a pyrolytic reactor **3.**

Therefore the hopper 5 and the pyrolytic reactor 3 are preferably functionally connected by the feed apparatus 6. The feed apparatus 6 further preferably comprises hydraulic pistons **60** and a separating device **61.**

The hydraulic pistons 60 are preferably suitable to feed the pre-treatment waste 2a to the pyrolytic reactor 3 at a variable frequency. They are also suitable, for example, to operate feeding means provided in the hopper 5 and in the feed apparatus 6. Therefore, the hydraulic pistons 60 are actuators, for example suitable to operate sliders, or to open and close apertures.

Preferably there are three hydraulic pistons 60 and, in particular, one piston is connected to the weighing means 50 and is suitable to open or close the aperture of the hopper 5; a second piston is connected to a linear slider suitable to push the pre-treatment waste 2a into the duct towards the pyrolytic reactor 3; a third piston is connected to an aperture close to the pyrolytic reactor 3 suitable to be opened or closed in a controlled manner and according to the amount of material requested inside the pyrolytic reactor 3.

The separating device 61 is instead suitable to reduce the amount of oxygen in input to the pyrolytic reactor 3 and therefore preferably consists of a nitrogen barrier.

It is important to reduce the presence of oxygen as much as possible so as to maintain chemically reducing conditions in the environment inside the apparatus 10 and, especially, in proximity to and inside the pyrolytic reactor 3 .

Therefore preferably in the first step 1 a the pre-treatment waste 2a is substantially introduced into the pyrolytic reactor 3.

In the second step 1b the pre-treatment waste 2a is thermally disintegrated by means of pyrolysis into treated waste **4.**

This second step 1b preferably occurs inside the pyrolytic reactor 3 which is thus essentially the heart of the apparatus 10.

The pyrolytic reactor 3 is preferably a horizontal rotary reactor for example comprising a stainless steel chamber internally provided with electric heating elements which, when heated, allow the appropriate operating temperature to be reached.

The reactor 3 further comprises an inside surface of the chamber that is preferably spiral shaped to improve the mixing of the incoming waste 2 and which permits rotation in one direction or in the opposite direction.

The possibility of turning in both directions, combined with the spiral shape, enables the reactor 3 to adjust the speed at which the waste 2 advances through it and thus the amount of time it remains inside it.

In particular, the second step 1b preferably includes a process of breaking the molecular bonds in the material that constitutes the pre-treatment waste 2a and the formation of new bonds to form new molecules.

The process of breaking the bonds takes place by delivering heat to the inside of the chamber of the reactor 3 and therefore, preferably, the pyrolytic reactor 3 has operating temperatures ranging from 600 °C to 700 °C.

The waste 2 is thus kept inside the reactor 3 for a time of preferably between 90 and 120 minutes depending on the type of waste 2.

Furthermore, the chemical reactions that occur inside the chamber do not require the use, for example, of additives or catalysts and, as already mentioned, it is important to keep the level of oxygen under control in order to maintain a reducing reaction environment.

Said chemical reactions, as already mentioned, result in the formation of treated waste 4.

The treated waste 4 is thus separated into a solid phase **40** and a gaseous phase **41.**

The liquid phase is substantially absent thanks to the operating conditions inside the chamber of the pyrolytic reactor 3 and possibly only consists of the condensed moisture present in the pre-treatment waste 2a.

The solid phase 40 preferably comprises the carbonaceous residues in the form of powder or inert substances which still have the radioactivity of the pre-treatment waste 2a, whereas the gaseous phase 41 substantially consists of synthesis gases with a balanced electric charge and which are not radioactive.

In particular, the solid phase 40 preferably represents not more than 20% of the weight of the pre-treatment waste 2a fed into the pyrolytic reactor 3 and, more appropriately, the solid phase 40 is between 10% and 15% of the weight of the pre-treatment waste 2a.

In terms of volume, the solid phase 40 is preferably between 5% and 10% of the volume of the pre-treatment waste 2a.

The remainder of the weight or volume included in the gaseous phase 41 may be made up of one or more gases such as, for example, molecular hydrogen (H₂), carbon monoxide (CO), methane gas (CH₄), ethane gas (C₂H₆), propane gas (C₃H₈), ethylene gas (C₂H₄) and butane (C₄H₁₀).

The calorific power of the gaseous phase 41 is also preferably variable between 7800 and 8500 Kcal/Kg.

In the second step 1 b the pyrolytic reactor 3 also separates the solid phase 40 from the gaseous phase 41 inside a cyclone chamber **30.**

Therefore, the cyclone chamber is preferably included in the reactor and is adjacent to the molecule disintegration chamber.

The cyclone chamber 30 has a conventional structure typical of centrifugal dust separators or cyclones for separating dust from gases by means of centrifugal force. In particular the solid phase 40 separated inside the chamber 30 is ejected by gravity whereas the low density gaseous phase 41 comes out from the top of the cyclone chamber 30.

Secondary control or safety devices may also be installed inside the pyrolytic reactor 3.

For example it may comprise a closed-circuit air cooling device to block the molecular disintegration reaction, in particular in situations when the plant is stopped or in an emergency.

Said system is preferably suitable to cool the reactor chamber 3 to a temperature of below 100 °C in less than 30 minutes.

There may also be other control devices such as, for example, a system for measuring the mass of the gaseous phase 41 which allows the plant 10 to weigh the matter by comparing the quantity in weight of the pre-treated waste 2a fed into the reactor 3 detected by the weighing means 50.

By controlling the amount of gaseous phase 41 in the chamber and pre-treatment waste 2a in input it is possible, for example, to adjust the operating parameters of the plant 10 such as the rotation of the pyrolytic reactor 3, the temperature of the reactor 3 and the amount in waste 2a introduced into the reactor 3 to ensure good levels of efficiency of the plant 10, that is, to ensure a low percentage of solid phase 40 that is still radioactive.

Once the solid and gaseous phases (40, 41) have been separated, the method 1 preferably comprises the third step 1c in which the solid phase 40 is stored according to conventional radioactive waste storage procedures.

In detail, in the third step 1 c the solid phase 40 is ejected from the cyclone chamber 30 by gravity and introduced into an extraction chamber **31.**

The extraction chamber 31 is therefore also preferably comprised in the pyrolytic rector 3 and, for example, adjacent to the cyclone chamber 30.

Moreover, between the cyclone chamber 30 and the extraction chamber 31 there are preferably valve devices to only allow the solid phase 40 to pass through the extraction chamber 31.

The extraction chamber 31 is thus preferably suitable to cool and compact the solid phase 40 prior to extraction.

It comprises, for example, a chamber with closed water circuit for cooling the inert materials and a compacting system, for example a pressure system, for further reducing the volume of the solid phase 41.

The extraction chamber 31 may thus comprise screw means to convey the treated solid phase 41 towards a discharge outlet that leads to conventional storage systems for radioactive material.

In the fourth step 1d the gaseous phase 41 is preferably expelled into the outside environment.

Before reaching the outside, the gaseous phase 41 undergoes, for example, a plurality of steps suitable to wash the gas and eliminate any residual moisture in the gaseous phase 41 by means of condensation.

In detail, in the fourth step 1 d the gaseous phase 41 preferably comes out from the top of the cyclone chamber 30 and is introduced into an ejector **7.**

The ejector 7 is, for example, of the converging-diverging or Venturi type and is suitable to cool the gaseous phase 41 by means of a jet of water.

Preferably the ejector 7 is thus an immediate cooling system, or quenching system, in which the gaseous phase 41 is cooled rapidly to a temperature of around 30-40 °C and at the same time is washed.

In addition, in the fourth step 1d the gaseous phase 41 comes out of the ejector 7 and flows into a scrubber chamber **8.**

The scrubber chamber **8** is preferably suitable to wash the gaseous phase 41 in counter current in such a way as to totally remove the residues suspended in the solid phase 40. Therefore the scrubber chamber 8 is preferably a conventional scrubber chamber for counter current washing.

In addition to the functions described above, the scrubber chamber 8 is also preferably suitable to neutralize the acidic or basic solid residues.

The plant 10 may therefore comprise an extraction system, connected to the storage tank of the scrubber chamber 8, suitable to transfer condensate and solid residues to an evaporation concentrator capable of reducing the volume of the residues thus removed.

After leaving the scrubber chamber 8, still in the fourth step 1 d, the gaseous phase 41 preferably flows into a heat exchanger **9.**

The heat exchanger 9 is suitable to cool the gaseous phase 41 to a temperature of below 0 °C in order to separate the gaseous phase 41 from any condensed moisture.

In particular, any moisture that is still present and which is made to condensate is eliminated, for example, by means of a cyclone system.

Lastly in the fourth step 1 d the gaseous phase 41 comes out of the heat exchanger 9 and flows into one of a choice between a storage apparatus **90** and a neutralization apparatus **91.**

Preferably, the gaseous phase 41 flows towards the outside, that is, towards the storage apparatus 90 or neutralization apparatus 91, by means of blowers.

The storage apparatus 90 is, in detail, preferably suitable to compress and store the gaseous phase 41, whereas the neutralization apparatus 91 is suitable to oxidize the gaseous phase 41.

Preferably, the gaseous phase 41, if it passes through the neutralization apparatus 91, is subsequently sent to the storage apparatus 90.

At the end of said processes the gaseous phase 41 is preferably discharged in safety to the outside, that is, into the atmosphere.

The waste disposal method and apparatus according to the invention achieve some important advantages.

The method and apparatus enable a good part of the radioactive material to be disposed of effectively. The radioactive material is, in fact, reduced to the solid phase only which, with respect to the initial material, is between 10% and 15% of the weight and 5-10% of the volume.

Following this reduction another advantage lies in the fact that the radioactive material to be stored at specific facilities takes up less space and less time is required for radioactive decay to occur.

Lastly, since the use of radioactive waste storage systems is reduced, the costs of maintaining such systems and any risks associated with maintaining such facilities are advantageously further reduced.

Modifications and variations may be made to the invention described herein without departing from the scope of the inventive concept as defined in the claims.

For example, a heat exchanger could be connected between the collection tank of the scrubber chamber 8 and the ejector 7 to allow the scrubber chamber 8 to supply the water needed to operate the ejector 7 for quenching.

Moreover the hydraulic plant could comprise connections to a refrigerator to allow the liquid to flow through the heat exchangers at the right temperature.

All details may be replaced with equivalent elements and the scope of the invention includes all other materials, shapes and dimensions.

## Claims

1. A method (1) for disposing of waste (2), said waste (2) being radioactive waste and the method (1) being **characterized in that** it comprises:
- a first step (1 a) in which the pre-treatment waste (2a) is placed inside a pyrolytic reactor (3),
- a second step (1b), in which said pre-treatment waste (2a) is thermally disintegrated by pyrolysis into treated waste (4),
- said treated waste (4) comprising a solid phase (40) and a gaseous phase (41),
- a third step (1c) in which said solid phase (40) is stored according to known storage procedures of radioactive waste,
- a fourth step (1d) in which said gaseous phase (41) is expelled into the outside environment.

2. Method (1) according to one or more of the preceding claims, wherein in said second step (1 b) said pyrolytic reactor (3) separates said solid phase (40) and said gaseous phase (41) inside a cyclone chamber (30), said solid phase (40) comprising carbonaceous solids in quantities comprised between 10% and 15% of the weight of the pre-treatment waste (2a) introduced and said gaseous phase (41) being constituted by one of a choice between molecular hydrogen, carbon monoxide, methane, ethane gas, propane gas, ethylene gas and butane.

3. Method (1) according to at least one preceding claim, wherein in said third step (1 c) said solid phase (40) is ejected by gravity from said cyclone chamber (30) and is introduced into an extraction chamber (31), said extraction chamber (31) being suitable to cool and compact said solid phase (40) before extraction.

4. Method (1) according to at least one preceding claim, wherein in said fourth step (1 d) said gaseous phase (41) comes out from the top of said cyclone chamber (30) and is introduced into an ejector (7), said ejector (7) being of the Venturi type and being suitable to cool said gaseous phase (41) by means of a water jet.

5. Method (1) according to at least one preceding claim, wherein in said fourth step (1d) said gaseous phase (41) comes out of said ejector (7) and flows inside a scrubber chamber (8), said scrubber chamber (8) being suitable to wash said gaseous phase (41) in counter current in such a way as to totally remove the residues suspended in said solid phase (40).

6. Method (1) according to at least one preceding claim, wherein in said fourth step (1d) said gaseous phase (41) comes out of said scrubber chamber (8) and flows inside a heat exchanger (9), said heat exchanger (9) being suitable to cool said gaseous phase (41) to temperatures below 0°C so as to separate said gaseous phase (41) from any condensed moisture.

7. Method (1) according to at least one preceding claim, wherein in said fourth step (1d) said gaseous phase (41) comes out of said heat exchanger (9) and flows inside one of a choice between a storage apparatus (90) and a neutralization apparatus (91), said storage apparatus (90) being suitable to compress and store said gaseous phase (41), and said neutralization apparatus (91) being suitable to oxidise said gaseous phase (41).

8. Method (1) according to claim 1, wherein in said first step (1 a) the pre-treatment waste (2) is placed in a hopper (5), said hopper (5) comprising weighing means (50) suitable to detect the weight of said pre-treatment waste (2a).

9. Method (1) according to one or more of the preceding claims, wherein in said first step (1 a) said pre-treatment waste (2a) is fed from said hopper (5) into said pyrolytic reactor (3) by means of a feed apparatus (6) suitable to functionally connect said hopper (5) to said pyrolytic reactor (3), said feed apparatus (6) comprising hydraulic pistons (60) suitable to feed said pyrolytic reactor (3) with said pre-treatment waste (2a) at a variable frequency and comprising a filtering device (61) suitable to reduce the amount of oxygen in input to said pyrolytic reactor (3).

10. Plant (10) suitable to perform the method (1) according to at least one preceding claim, and comprising: a hopper (5), a pyrolytic reactor (3), a feed apparatus (6), a cyclone chamber (30), an extraction chamber (31), and an ejector (7).
